(19) Europäisches Patentamt
European Patent Office
Office européen des brevets

(11) Veröffentlichungsnummer: **0 012 341**
**B1**

(12) # EUROPÄISCHE PATENTSCHRIFT

(45) Veröffentlichungstag der Patentschrift: **08.09.82**

(51) Int. Cl.³: **C 09 B 62/06,** D 06 P 3/66, D 06 P 3/10

(21) Anmeldenummer: **79104925.7**

(22) Anmeldetag: **05.12.79**

(54) **Anthrachinon-Reaktivfarbstoffe sowie deren Verwendung zum Färben von OH- oder amidgruppenhaltigen Materialien.**

(30) Priorität: **16.12.78 DE 2854483**

(43) Veröffentlichungstag der Anmeldung: **25.06.80 Patentblatt 80/13**

(45) Bekanntmachung des Hinweises auf die Patenterteilung: **08.09.82 Patentblatt 82/36**

(84) Benannte Vertragsstaaten: **CH DE FR GB**

(56) Entgegenhaltungen:
**CH-A-471 207**
**FR-A-2 370 781**
**US-A-3 558 620**

(73) Patentinhaber: **BAYER AG, Zentralbereich Patente, Marken und Lizenzen, D-5090 Leverkusen 1, Bayerwerk (DE)**

(72) Erfinder: **Harms, Wolfgang, Dr., Walter-Flex-Strasse 21, D-5090 Leverkusen 1 (DE)**
Erfinder: **Wunderlich, Klaus, Dr., Carl-Rumpff-Strasse 21, D-5090 Leverkusen 1 (DE)**
Erfinder: **von Oertzen, Klaus, Dr., Hahnenweg 8, D-5000 Koeln 80 (DE)**

**EP 0 012 341 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Anthrachinon-Reaktivfarbstoffe sowie deren Verwendung zum Färben von OH- oder amidgruppenhaltigen Materialien

Gegenstand der vorliegenden Erfindung sind Reaktivfarbstoffe der Formel

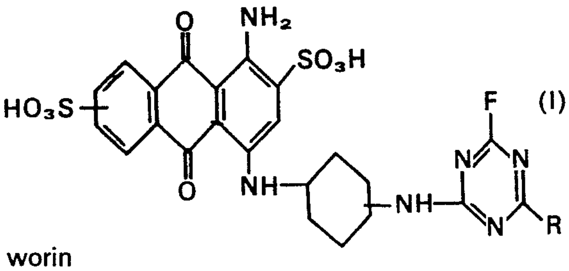

(I)

worin

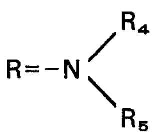

(wobei $R_4$, $R_5$=H oder gegebenenfalls substituiertes $C_1$-$C_4$-Alkyl),
gegebenenfalls substituiertes Arylamino,
$OR_6$ (wobei $R_6$=gegebenenfalls substituiertes $C_1$-$C_6$-Alkyl).
Besonders bevorzugt sind Farbstoffe der obigen Formel (I), wobei
R für gegebenenfalls durch $SO_3H$, COOH, $CH_3$, Cl oder $OCH_3$ substituiertes Phenylamino steht.

Geeignete Aminreste R sind neben $NH_2$ Monoalkylaminogruppen,

wie $NHCH_3$,
$NH-C_2H_5$,
$NH-C_3H_7$,
$NH-C_4H_9$,
$NH-CH_2-CH_2-OH$,
$NH-CH_2-CH_2-OSO_3H$,
$NH-CH_2-CH_2-SO_3H$,
$NH-CH_2-COOH$,
$NH-CH_2-CH_2-OCH_3$,
$NH-CH_2-CH_2-OC_2H_5$,
$NH-CH_2-CH(OH)-CH_2-OH$,
Dialkylaminogruppen,
wie $N(CH_3)_2$,
$N(C_2H_5)_2$,
$N(CH_3)C_2H_5$,
$N(CH_3)C_3H_7$,
$N(CH_3)-CH_2-CH_2OH$,
$N(CH_2-CH_2OH)_2$,

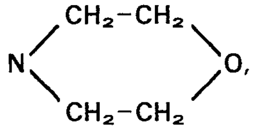
,

$N(CH_2-CH_2-SO_3H)_2$,
$N(CH_2-COOH)_2$,
$N(CH_3)-CH_2-CH_2-SO_3H$,
$N(CH_3)-CH_2-CH_2-OSO_3H$,
$N(CH_3)-CH_2-SO_3H$,
$N(CH_3)-CH_2-COOH$.

Geeignete Arylaminogruppen R sind beispielsweise Phenylamino,
2-, 3- oder 4-Sulfophenylamino,
2,4-, 2,5-, 3,5- oder 3,4-Disulfophenylamino,
2-, 3-, 4-Carboxyphenylamino,
2-Carboxy-4- oder -5-sulfophenylamino,
3-Carboxy-5-sulfophenylamino,
2-Methyl-4,5-disulfophenylamino,
4-Methyl-2- oder -3-sulfophenylamino,
2-Methyl-4- oder -5-sulfophenylamino,
2,6-Dimethyl-3- oder -4-sulfophenylamino,
2,4-Dimethyl-6-sulfophenylamino,
2-Chlor-4- oder -5-sulfophenylamino,
3-Chlor-2-methyl-6-sulfophenylamino,
4-Methoxy-2- oder -3-sulfophenylamino,
2-Methoxy-5-sulfophenylamino,
2-(β-Hydroxyethoxy)-5-sulfophenylamino,
4-(β-Hydroxyethoxy)-2- oder
-3-sulfophenylamino,
4-Sulfomethylphenylamino, 2-, 3- oder
4-Methylphenylamino, 2-, 3- oder
4-Chlorphenylamino, 2-, 3- oder
4-Methoxyphenylamino, 3- oder
4-Nitrophenylamino,
2-, 3- oder 4-Acetylaminophenylamino,
4-N-Methyl-N-acetylphenylamino,
N-Methylphenylamino,
N-Methyl-2-methyl-5-sulfophenylamino,
N-Methyl-3-sulfophenylamino,
N-(β-Hydroxyethyl)phenylamino,
N-Ethylphenylamino,
N-β-Sulfoethylphenylamino.

1-, 3-, 4-, 5-, 7- oder
8-Sulfo-2-naphthylamino,
2-, 3-, 4-, 5-, 6-, 7- oder
8-Sulfo-1-naphthylamino,
1,5-, 2,6-, 4,8-, 5,7- oder
6,8-Disulfo-2-naphthylamino,
2,4-, 3,7-, 3,8-, 4,8-, 5,7- oder
6,8-Disulfo-1-naphthylamino,
1,5,7- oder 3,6,8-Trisulfo-2-naphthylamino,
3,5,7- oder 3,6,8-Trisulfo-1-naphthylamino.

Geeignete Alkoxyreste R sind zum Beispiel

$OCH_3$, $OC_2H_5$, $OC_3H_7$, $OC_4H_9$,
$O-CH_2-CH_2-OH$,
$O-CH_2-CH_2-OCH_3$,
$O-CH_2-CH_2-OC_2H_5$,
$O-CH_2-CH_2-Cl$,
$O-CH_2-CH_2-O-C_6H_5$,
$O-CH_2-CH_2-C_6H_5$.

In der CH-A Nr. 471207 werden ähnlich strukturierte Anthrachinonfarbstoffe offenbart, wobei sich die Beispiele auf Farbstoffe mit Fluorchlorpyrimidinyl- und Dichlorchinoxalinylresten beziehen.

Bei den Anthrachinonreaktivfarbstoffen gemäss FR-A Nr. 2370781 fehlt zwingend die Sulfonsäuregruppierung im linken äusseren Teil des Anthrachinonchromophors.

Die Farbstoffe gemäss US-A Nr. 3558620 enthalten als Brückenglied an Stelle des Cyclohexylenringes den Phenylenrest.

Die neuen Farbstoffe werden erhalten, indem man Aminocyclohexylaminoverbindungen der Formel

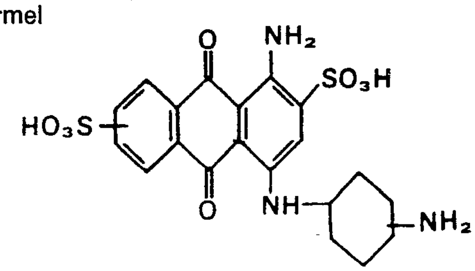

(II)

mit Difluortriazinylverbindungen der Formel

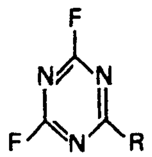

(III)

worin R die oben angegebene Bedeutung hat, kondensiert.

Für die Kondensation geeignete Verbindungen der Formel (III) sind beispielsweise:

2,4-Difluor-6-aminotriazin,
2,4-Difluor-6-methylaminotriazin,
2,4-Difluor-6-ethylaminotriazin,
2,4-Difluor-6-dimethyl- oder -6-diethylaminotriazin,
2,4-Difluor-6-methylethylaminotriazin,
2,4-Difluor-6-isopropylaminotriazin,
2,4-Difluor-6-butylaminotriazin,
2,4-Difluor-6-(β-hydroxyethylamino)triazin,
2,4-Difluor-6-bis-(β-hydroxyethyl)aminotriazin,
2,4-Difluor-6-(N-methyl-N-β-hydroxyethyl-amino)triazin,
2,4-Difluor-6-(N-methyl-N-sulfomethylamino)-triazin,
2,4-Difluor-6-phenylaminotriazin,
2,4-Difluor-6-(2'-, 3'- oder 4'-methylphenylamino)triazin,
2,4-Difluor-6-(2'-, 3'- oder 4'-chlorphenylamino)triazin,
2,4-Difluor-6-(2'-, 3'- oder 4'-methoxyphenylamino)triazin,
2,4-Difluor-6-(3'- oder 4'nitrophenylamino)triazin,
2,4-Difluor-6-(3'- oder 4'-acetylaminophenylamino)triazin,
2,4-Difluor-6-(4'-N-methyl-N-acetylaminophenylamino)triazin,
2,4-Difluor-6-N-methylphenylaminotriazin,
2,4-Difluor-6-[N-(β-hydroxyethyl)phenylamino]-triazin,
2,4-Difluor-6-N-ethylphenylaminotriazin,
2,4-Difluor-6-(2'-, 3'- oder 4'-sulfophenylamino)triazin,
2,4-Difluor-6-(2',4'-, 2',5'-, 3',4'- oder 3',5'-disulfophenylamino)triazin,
2,4-Difluor-6-(1',5'-, 2',6'-, 4',8'-, 5',7'- oder 6',8'-disulfo-2'-naphthylamino)triazin,
2,4-Difluor-6-(2',4'-, 3',7'-, 3',8'-, 4',8'-, 5',7'- oder 6',8'-disulfo-1'-naphthylamino)triazin,
2,4-Difluor-6-(1',5',7'- oder 3',6',8'-trisulfo-2'-naphthylamino)triazin,
2,4-Difluor-6-(3',5',7'-trisulfo-1'-naphthylamino)triazin,
2,4-Difluor-6-(2'-, 3'- oder 4'-carboxyphenylamino)triazin,
2,4-Difluor-6-(2'-carboxy-4'- oder -5'-sulfophenylamino)triazin,
2,4-Difluor-6-(3'-carboxy-5'-sulfophenylamino)-triazin,
2,4-Difluor-6-(2'-methyl-4'- oder -5'-sulfophenylamino)triazin,
2,4-Difluor-6-(4'-methyl-2'- oder -3'-sulfophenylamino)triazin,
2,4-Difluor-6-(2'-methyl-4', 5'-disulfophenylamino)triazin,
2,4-Difluor-6-(2',6'-dimethyl-3'-sulfo- oder 2',4'-dimethyl-6'-sulfophenylamino)triazin,
2,4-Difluor-6-(4-methoxy-2'-sulfo- oder 2'-methoxy-5'-sulfophenylamino)triazin,
2,4-Difluor-6-(2'-, 3'- oder 4'-sulfophenylmethylamino)triazin,
2,4-Difluor-6-(2'-carboxy-5'-sulfophenyl-methylamino)triazin,
2,4-Difluor-6-(3'- oder 4'-sulfomethylphenylamino)triazin,
2,4-Difluor-6-[N-(sulfomethyl)phenylamino]-triazin,
2,4-Difluor-6-methoxytriazin,
2,4-Difluor-6-ethoxytriazin,
2,4-Difluor-6-β-methoxyethoxytriazin,
2,4-Difluor-6-β-ethoxytriazin,
2,4-Difluor-6-β-hydroxyethoxytriazin.

Die Umsetzung der Aminocyclohexylaminoanthrachinonverbindungen (II) mit den 6-substituierten 2,4-Difluortriazinen (III) wird in wässrigem oder organisch-wässrigem Medium bei Temperaturen von −10° bis +80° C, vorzugsweise bei 0 bis 50° C, und bei pH-Werten von 5 bis 11, vorzugsweise 7,0 bis 10,0, in Gegenwart alkalischer Kondensationsmittel, wie wässrigen Alkalihydroxid-, Alkalicarbonat- oder Alkaliphosphatlösungen, durchgeführt.

Die Herstellung der 6-substituierten 2,4-Difluortriazine (III) kann entweder durch Kondensation von Cyanurfluorid mit aktiven Wasserstoff enthaltenden Verbindungen der allgemeinen Formel

$$H-R \qquad (IV)$$

worin R die oben angegebene Bedeutung hat, in wässrigem, wässrig-organischem oder organischem Medium in Gegenwart basischer Kondensationsmittel, wie z.B. wässriger Alkalihydroxid-, Alkalicarbonat-, Alkalihydrogencarbonat-, Alkaliphosphatlösungen oder N,N-Dialkylanilinen oder Trialkylaminen, erfolgen, oder man gewinnt diese Komponenten aus den 6-substituierten 2,4-Dichlortriazinen durch Austausch von Chlor gegen Fluor mittels Alkalifluoriden in organischen Lösungsmitteln oder mittels wasserfreier Flussäure.

Nach einer anderen Herstellungsweise erhält man die neuen Reaktivfarbstoffe (I) auch dadurch, dass man die Aminocyclohexylaminoanthrachinonverbindungen (II) in wässrigem bzw. wässrig-organischem oder organischem Medium

mit 2,4,6-Trifluortriazin zu Zwischenprodukten der Formel

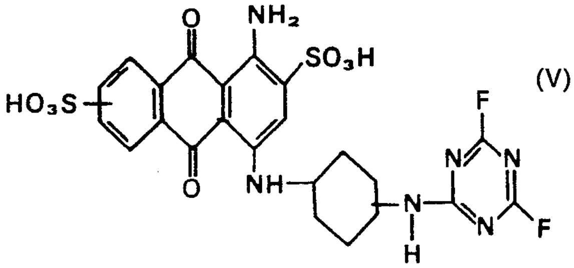

(V)

umsetzt und die reaktiven Zwischenprodukte in einem zweiten Reaktionsschritt mit den Verbindungen der allgemeinen Formel (IV) kondensiert.

Die neuen Farbstoffe sind äusserts wertvolle Produkte, die sich für verschiedenste Anwendungszwecke eignen. Als wasserlösliche Verbindungen finden sie bevorzugtes Interesse für das Färben hydroxylgruppenhaltiger und stickstoffhaltiger Textilmaterialien, insbesondere von Textilmaterialien aus nativer und regenerierter Cellulose, ferner aus Wolle, Seide, synthetischen Polyamid- und Polyurethanfasern.

Die genannten Materialien werden nach den für Reaktivfarbstoffe üblichen Verfahren gefärbt oder bedruckt. Man erhält licht- und nassechte, brillante, blaue Färbungen und Drucke.

Die Formeln der Farbstoffe in der Beschreibung und den Beispielen sind die der freien Säuren. Die Farbstoffe werden im allgemeinen in Form ihrer Alkalisalze, insbesondere der Natrium- oder Kaliumsalze, isoliert und angewandt.

*Beispiel 1* .

*A.* 9,0 g 3-Aminobenzolsulfonsäure werden in 90 ml Wasser suspendiert. Man stellt den pH-Wert auf 3,5 ein und lässt in 5 min bei 0 bis 5° C 7,1 g Cyanurfluorid zutropfen. Dabei wird der pH-Wert mit 2N-Sodalösung auf 3,5 gehalten. Nach 10 min langem Nachrühren ist die Kondensation beendet.

*B.*. Die erhaltene Lösung lässt man bei 0 bis 5° C zu einer auf pH 9 gestellten Lösung von 20,0 g 1-Amino-4-(4'-aminocyclohexylamino)anthrachinon-2,6-disulfonsäure in 140 ml Wasser zutropfen und hält den pH-Wert im Reaktionsgemisch mit 2N-Natronlauge auf 8,5 bis 8,8. Man rührt 5 h unter den gleichen Bedingungen weiter, lässt die Temperatur dann auf 20° C ansteigen und salzt bei pH 8,5 den erhaltenen Farbstoff der Formel

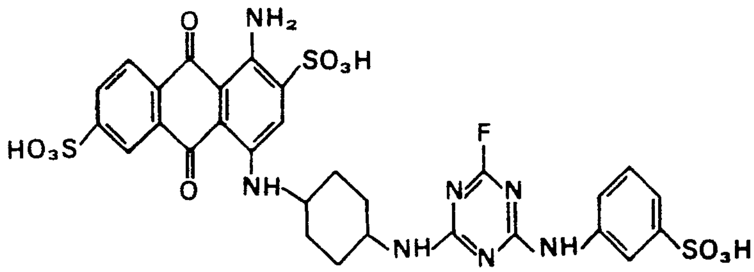

im Laufe von 2 bis 3 h mit 20% Kaliumchlorid aus. Der Farbstoff wird abgesaugt, mit 20%iger, zum Schluss mit 15%iger Kaliumchloridlösung gewaschen und bei 40% im Vakuum getrocknet.

*C.* 50 g Baumwollstrang werden in 1 l Färbeflotte, die 1,5 g obigen Farbstoffes enthält, gefärbt, indem man innerhalb 30 min auf 40° C heizt, 50 g Natriumchlorid in mehreren Anteilen zugibt, anschliessend 20 g Soda zufügt und 60 min bei dieser Temperatur behandelt. Nach dem Spülen, kochenden Seifen und Trocknen erhält man eine sehr brillante, blaue Färbung von ausgezeichneter Licht- und Nassechtheit.

*Beispiel 2*

*A.* 12,0 g 2-Aminobenzol-1,4-disulfonsäure werden in 50 ml Wasser durch Zugabe von 2N-Soda bis pH 4,5 gelöst. Zu der Lösung lässt man in 5 bis 10 min bei 0 bis 5° C 7,2 g Cyanurfluorid zutropfen und hält den pH-Wert mit 2N-Sodalösung auf 4,2 bis 4,7. 15 min nach dem Eintropfen ist die Kondensation beendet.

*B.* Die erhaltene Lösung der Reaktivkomponente lässt man bei 0 bis 5° C zu einer auf pH 9 gestellten Lösung von 18,0 g 1-Amino-4-(4'-aminocyclohexylamino)anthrachinon-2,6-disulfonsäure in 180 ml Wasser im Laufe von 30 min zutropfen und hält den pH-Wert im Reaktionsgemisch durch Zugabe von 2N-Natronlauge auf 8,5 bis 8,7. Nach 3 h lässt man die Temperatur auf 20° C ansteigen. Danach ist die Kondensation beendet. Aus der Lösung wird der Farbstoff mit 20% Kaliumchlorid ausgesalzen. Man saugt ab und wäscht den Filterkuchen mit 20%iger Kaliumchloridlösung. Der erhaltene Farbstoff der Formel

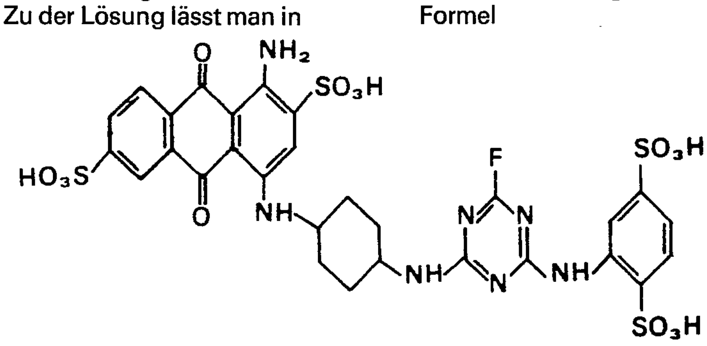

wird bei 40° C im Vakuum getrocknet und gibt nach den Färbenverfahren des Beispiels 1 C auf Baumwolle eine brillante blaue Färbung mit ausgezeichneten Licht- und Nassechtheiten.

*C.* Nach dem Kalt/Verweil-Verfahren werden 100 g Baumwollgewebe bei Raumtemperatur mit einer wässrigen Lösung, die 30 g/l Farbstoff auf 20 g/l Soda enthält, auf einem Foulard so geklotzt, dass die Flottenaufnahme des Gewebes 80% seines Trockengewichtes beträgt. Man rollt das Gewebe auf und bewahrt es 24 h bei 25° C auf, dass keine Feuchtigkeit entweichen kann. Anschliessend wird das Gewebe gespült, kochend geseift und getrocknet. Man erhält eine sehr brillante licht- und nassechte Blaufärbung.

*D.* Beim Druckverfahren wird Cellulosegewebe mit einer Druckpaste bedruckt, die im Kilogramm 40 g des obigen Farbstoffes, 100 g Harnstoff, 300 ml Wasser, 500 g Alginatverdickung sowie 20 g Soda enthält und mit Wasser auf 1 kg aufgefüllt wurde. Man trocknet anschliessend, dämpft 2 min bei 105° C, spült mit heissem Wasser und seift danach kochend. Nach Spülen und Trocknen liegt ein brillanter, blauer Druck mit sehr guten Licht- und Nassechtheiten vor.

*Beispiel 3*

*A.* 10,8 g 4-Aminobenzol-1,3-disulfonsäure werden in 160 ml Wasser bei pH 3,5 gelöst. Bei 0 bis 5° C lässt man zu der Lösung 6,8 g Cyanurfluorid in 5 bis 10 min zutropfen und hält den pH-Wert mit 2N-Sodalösung auf 3,5 bis 4,0. Man rüht 15 min nach und stellt den pH-Wert dann auf 4,5.

*B.* Die Lösung der erhaltenen Reaktivkomponente lässt man bei 0 bis 5° C zu 15,9 g 1-Amino-4-(4'-aminocyclohexylamino)anthrachinon-2,7-disulfonsäure und 260 ml Wasser zutropfen und hält den pH-Wert im Reaktionsgemisch mit 2N-Natronlauge auf 8,6 bis 8,8. Nach beendeter Kondensation (chromatographische Kontrolle) erwärmt man die Lösung auf 20° C und salzt den erhaltenen Farbstoff der Formel

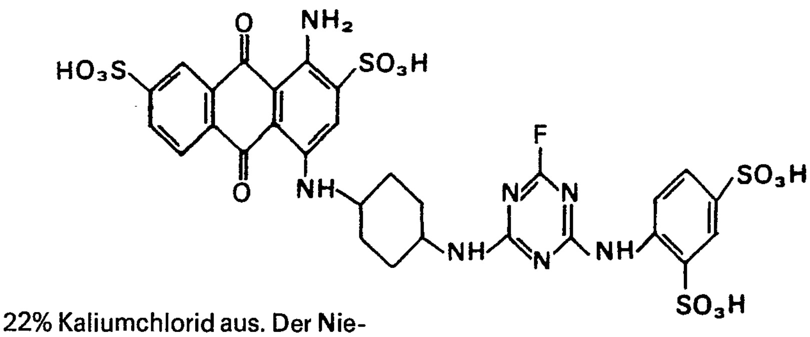

durch Zusatz von 22% Kaliumchlorid aus. Der Niederschlag wird abgesaugt, mit 25%iger Kaliumchloridlösung gewaschen und bei 45° C im Vakuum getrocknet.

Die Färbung von Cellulosematerialien kann man neben den geschilderten Methoden auch auf folgende Weise ausführen:

100 g Baumwollgewebe werden bei Raumtemperatur mit einer wässrigen Lösung, die 3% des obigen Farbstoffes, 20 g/l Natriumhydrogencarbonat und 150 g/l Harnstoff enthält, foulardiert, zwischengetrocknet, 2 min auf 140° C erhitzt, danach gespült und kochend geseift. Das Gewebe wird in äusserst brillanten, licht- und nassechten Blautönen gefärbt.

Weitere Reaktivfarbstoffe, die auf Cellulose brillante, blaue Färbungen und Drucke ergeben, erhält man durch Kondensation der Reaktivkomponenten aus Tabelle I, die analog den vorangegangenen Beispielen hergestellt werden, mit den angegebenen Anthrachinonkomponenten.

*Tabelle I*

| Nr. | Reaktivkomponente | Anthrachinonkomponente |
|---|---|---|
| 4 | 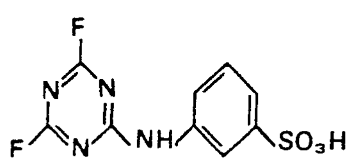 | 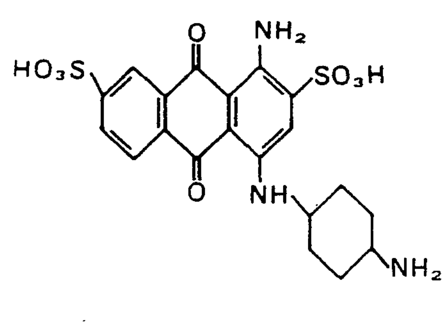 |

*Tabelle I*

| Nr. | Reaktivkomponente | Anthrachinonkomponente |
|---|---|---|
| 5 | 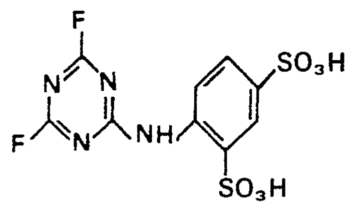 | 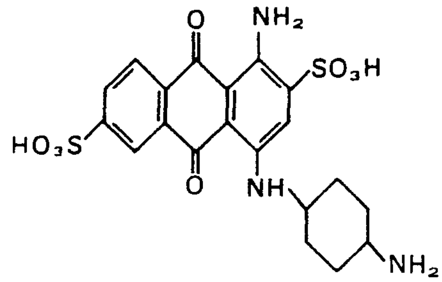 |
| 6 | 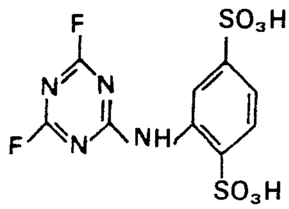 | 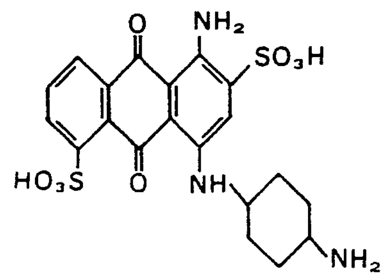 |
| 7 | 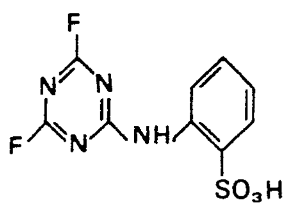 | 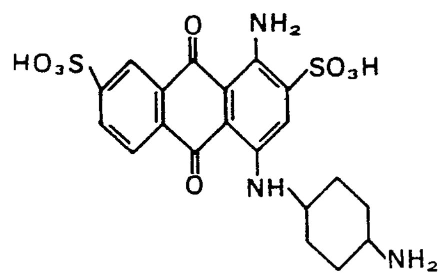 |
| 8 | 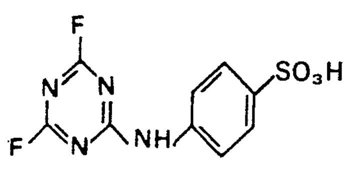 | 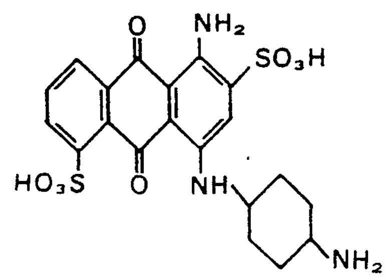 |
| 9 | 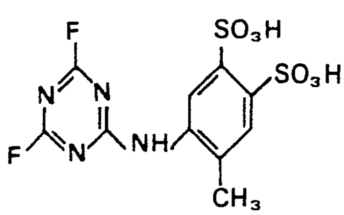 | 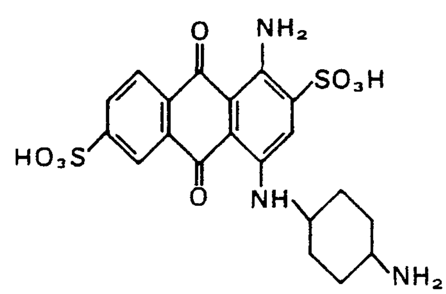 |

*Tabelle I*

| Nr. | Reaktivkomponente | Anthrachinonkomponente |
|---|---|---|
| 10 | 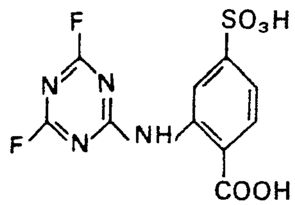 | 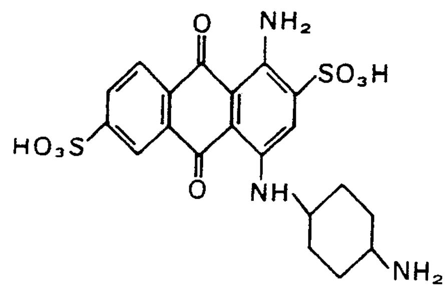 |
| 11 | 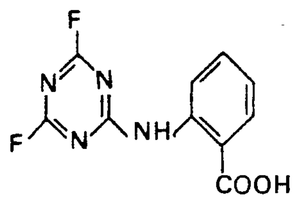 | 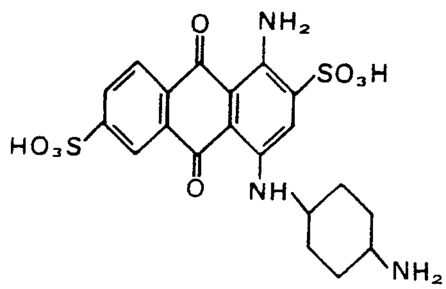 |
| 12 | 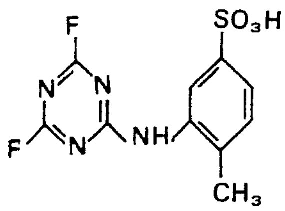 | 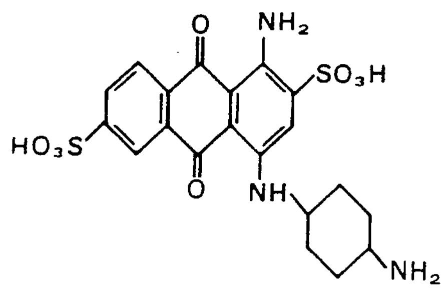 |
| 13 | 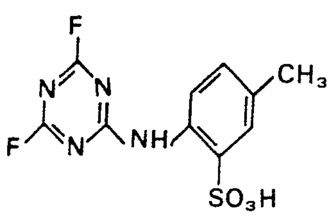 | 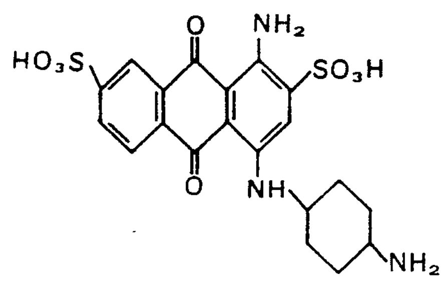 |
| 14 | 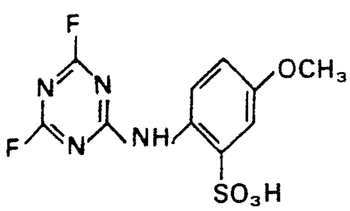 | 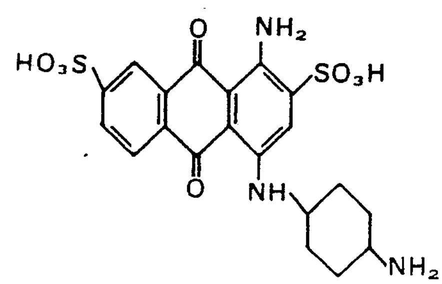 |

*Tabelle I*

| Nr. | Reaktivkomponente | Anthrachinonkomponente |
|---|---|---|
| 15 | 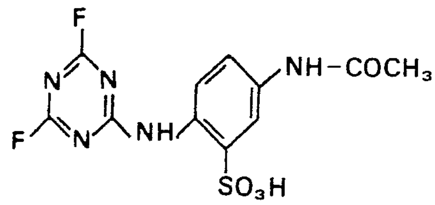 | 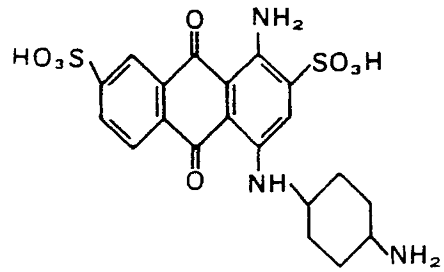 |
| 16 | 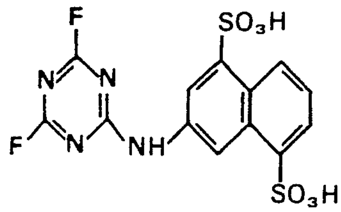 | 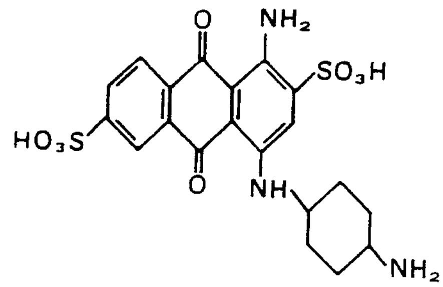 |
| 17 | 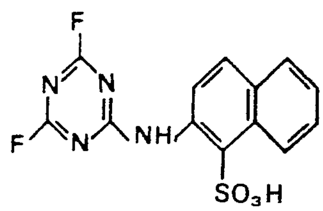 | 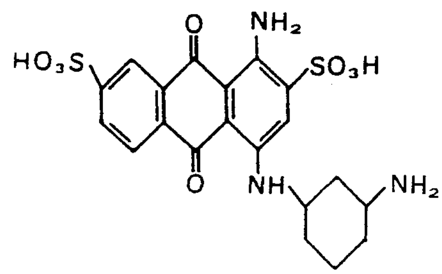 |
| 18 | 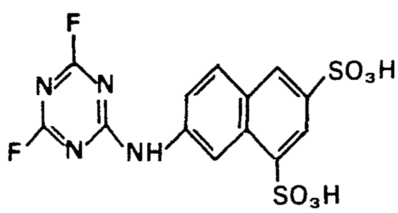 | 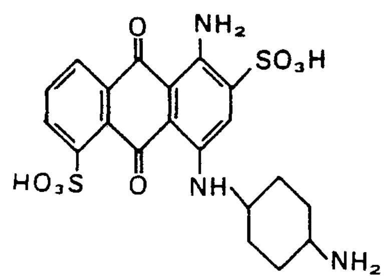 |
| 19 | 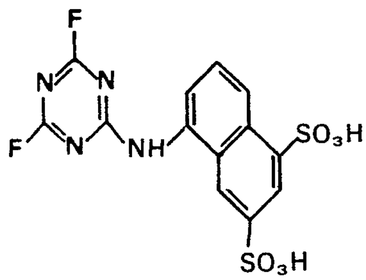 | 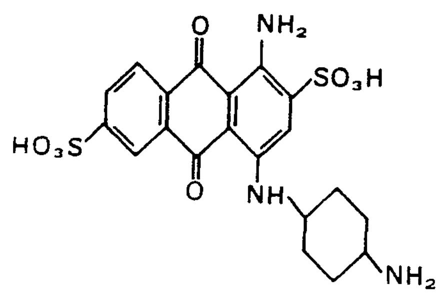 |

*Tabelle I*

| Nr. | Reaktivkomponente | Anthrachinonkomponente |
|---|---|---|
| 20 | 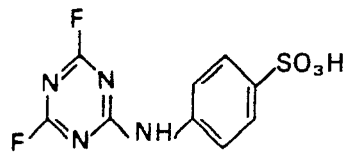 | 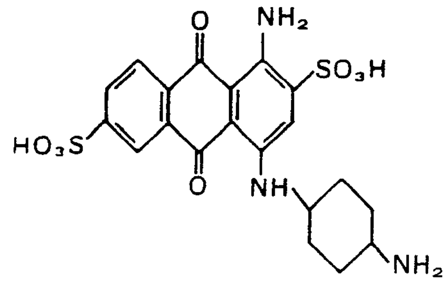 |
| 21 | 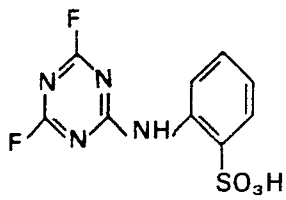 | 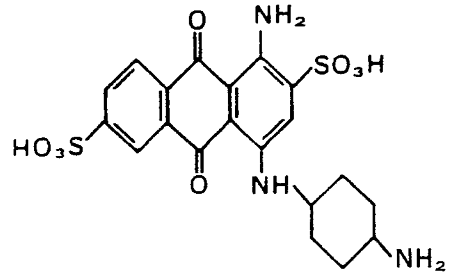 |
| 22 | 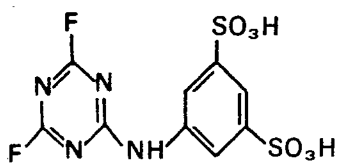 | 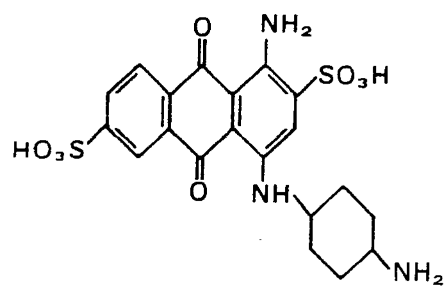 |
| 23 | 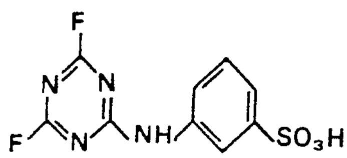 | 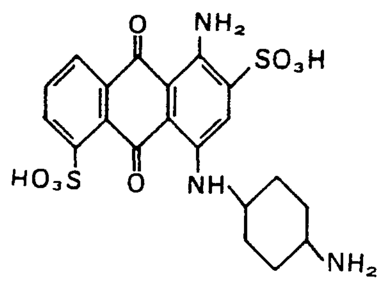 |
| 24 | 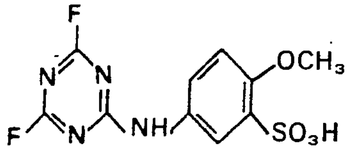 | 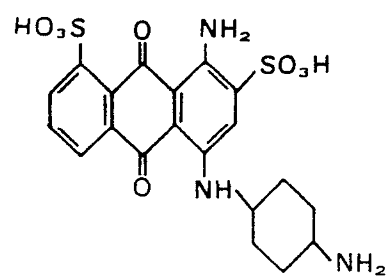 |

*Tabelle I*

| Nr. | Reaktivkomponente | Anthrachinonkomponente |
|---|---|---|
| 25 | 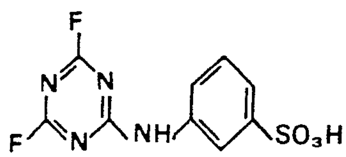 | 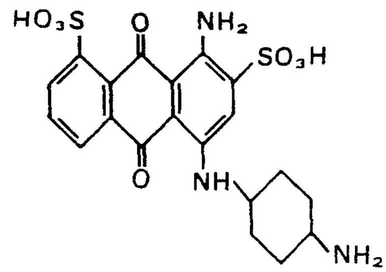 |
| 26 | 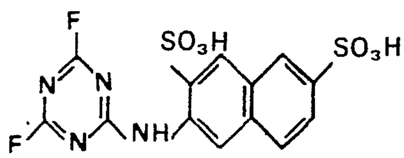 | 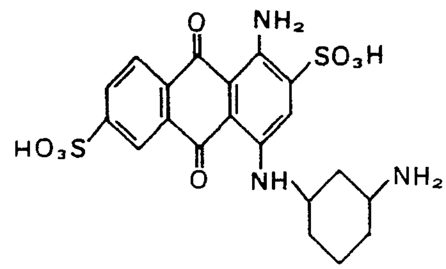 |
| 27 | 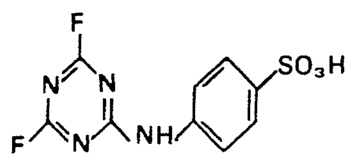 | 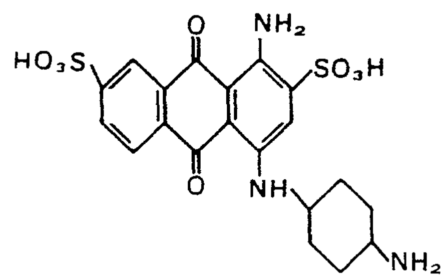 |
| 28 | 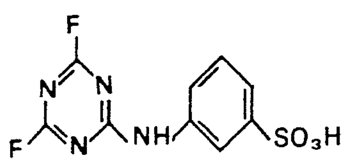 | 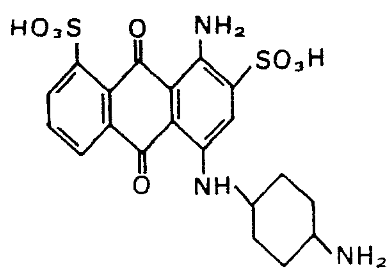 |
| 29 | 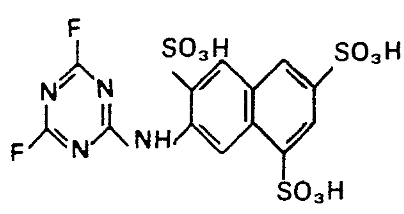 | 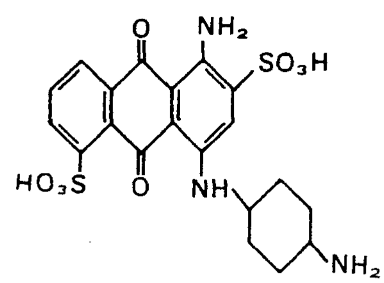 |
| 30 | 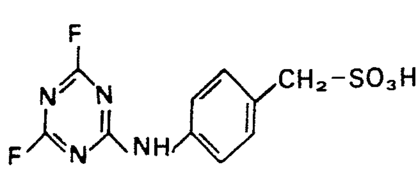 | 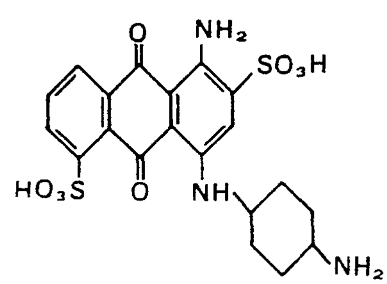 |

*Tabelle I*

| Nr. | Reaktivkomponente | Anthrachinonkomponente |
|---|---|---|
| 31 | 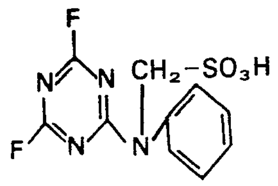 | 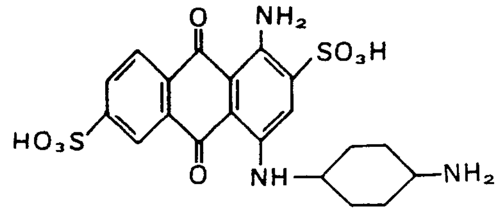 |

*Beispiel 32*

16,0 g 1-Amino-4-(4'-aminocyclohexylamino)anthrachinon-2,6-disulfonsäure werden bei pH 9 in 240 ml Wasser gelöst. Man kühlt die Lösung auf 0 bis 5° C ab und lässt in 20 bis 30 min 7,0 g 2,4-Difluor-6-(β-methoxyethoxy)triazin gleichzeitig zutropfen. Durch gleichzeitige Zudosierung von 2N-Natronlauge hält man im Reaktionsgemisch den pH-Wert auf 8,5 bis 8,7. Man rührt nach dem Eintropfen der Reaktivkomponente noch 30 min nach und salzt nach beendeter Kondensation den Farbstoff mit 20% Natriumchlorid aus. Man saugt die Fällung ab, wäscht sie mit 20%iger Natriumchloridlösung und trocknet den Filterkuchen bei 40° C im Vakuum. Der Farbstoff der Formel

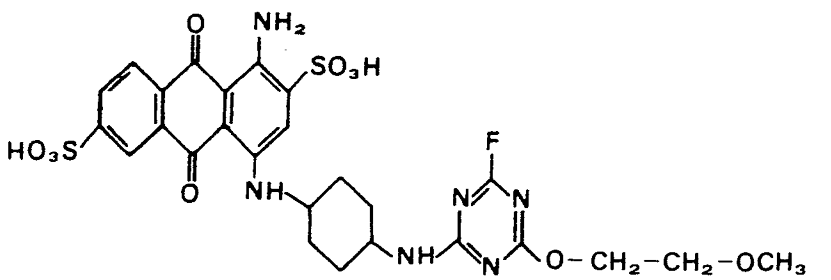

färbt Baumwolle aus langer Flotte bei 40° C nach dem Verfahren des Beispiels 1 C in klaren, kräftigen Blautönen von ausgezeichneten Licht- und Nassechtheiten.

*Beispiel 33*

10,5 g 1-Amino-4-(4'-aminocyclohexylamino)anthrachinon-2,7-disulfonsäure werden bei pH 9 in 200 ml Wasser gelöst. Man kühlt die Lösung auf 5 bis 10° C ab und lässt in 20 min 3,5 g 2,4-Difluor-6-methoxytriazin zutropfen. Im Reaktionsgemisch wird der pH-Wert mit N-Natronlauge auf 8,5 bis 8,7 gehalten. Man rührt 30 min bei 5 bis 10° C nach, lässt dann die Temperatur auf 20° C ansteigen und salzt den Farbstoff der Formel

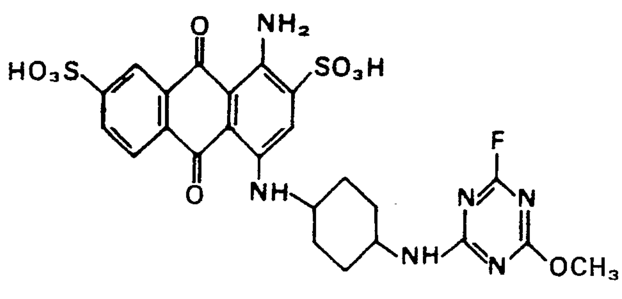

mit 15% Natriumchlorid aus. Man saugt das ausgefallene Produkt ab, wäscht den Filterkuchen mit 15%iger Natriumchloridlösung und trocknet ihn bei 40° C im Vakuum. Der Farbstoff färbt Baumwolle aus langer Flotte nach Beispiel 1 C in sehr licht- und nassechten, leuchtenden Blautönen.

*Beispiel 34*

15,0g 1-Amino-4-(4'-aminocyclohexylamino)-anthrachinon-2,6-disulfonsäure werden in 225 ml Wasser bei pH 9 und 20° C gelöst. Man trägt in die Lösung bei 20° C 5,1 g 2,4-Difluor-6-methylaminotriazin ein und hält den pH-Wert mit 2N-Natronlauge auf 8,5 bis 9,0. Man rührt 4 h nach, tropft dann 300 ml 25%ige Natriumchloridlösung in das Reaktionsgemisch, setzt noch 60 g Natriumchlorid hinzu und saugt den ausgefällten Farbstoff an. Das Produkt wird mit 15%iger Natriumchloridlösung gewaschen und bei 50° C im Vakuum getrocknet.

Der erhaltene Farbstoff der Formel

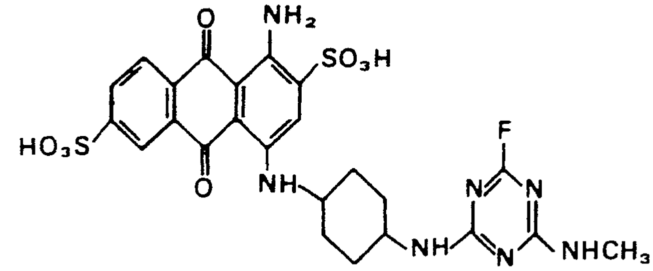

färbt Baumwolle aus langer Flotte bei 50° C in klaren Blautönen mit ausgezeichneten Echtheiten.

*Beispiel 35*

14,0 g 1-Amino-4-(4'-aminocyclohexylamino)anthrachinon-2,7-disulfonsäure werden in 280 ml Wasser bei pH 9 und 20° C gelöst. Man trägt in die Lösung in 15 min 6,1 g 2,4-Difluor-6-diethylaminotriazin ein und hält den pH-Wert mit 2N-Natronlauge auf 8,7 bis 9,0. Man rührt unter den angegebenen Bedingungen 12 h nach, klärt dann die Farbstofflösung von geringen Rückständen der Reaktivkomponente und lässt zu dem Filtrat 250 ml 25%ige Natriumchloridlösung zutropfen. Der ausgefallene Farbstoff der Formel

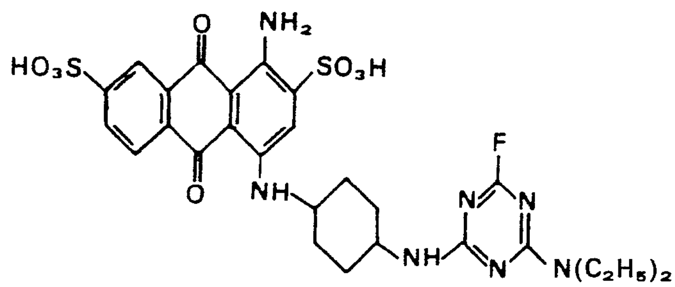

wird abgesaugt, mit 10%iger Natriumchloridlösung gewaschen und bei 50° C im Vakuum getrocknet. Der Farbstoff gibt auf Baumwolle nass- und lichtechte, brillante blaue Färbungen und Drucke.

*Beispiel 36*

9,9 g 1-Amino-4-(4'-aminocyclohexylamino)anthrachinon-2,5-disulfonsäure werden in 250 ml Wasser suspendiert und durch Zusatz von 2N-Natronlauge bei pH 10,5 in Lösung gebracht. Man kühlt die Lösung auf 0 bis 5° C und lässt innerhalb von 30 min 4,4 g 2,4-Difluor-6-(β-methoxyethoxy)triazin zutropfen. Zur Kondensation hält man den pH-Wert mit 2N-Natronlauge auf 10 bis 10,5. Nach beendeter Umsetzung stellt man den pH-Wert auf 7 bis 7,5 und salzt den Farbstoff mit 30 g Natriumchlorid aus. Er wird abgesaugt, mit 15%iger Natriumchloridlösung gewaschen und bei 40° C im Vakuum getrocknet.

Der Farbstoff der Formel

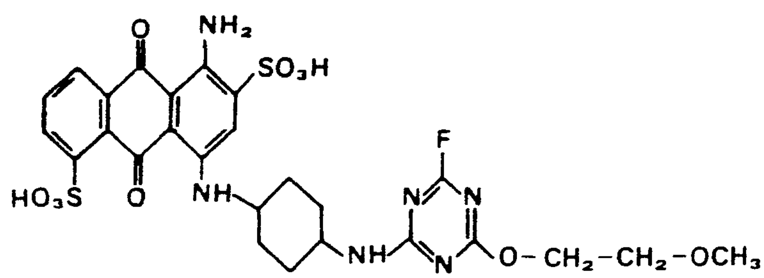

färbt Baumwolle aus langer Flotte bei 40 bis 50° C in brillanten Blautönen mit ausgezeichneten Echtheiten.

*Beispiel 37*

12,0 g 1-Amino-4-(4'-aminocyclohexylamino)anthrachinon-2,6-disulfonsäure werden in 250 ml Wasser und 14 ml 2N-Natronlauge gelöst. Man kühlt die Lösung auf 0 bis 5° C ab, stellt den pH-Wert auf 9 und gibt 5,7 g 2,4-Difluor-6-anilinotriazin im Laufe von 20 min zu. Der pH-Wert wird während der Zugabe und auch später mit 2N-Natronlauge auf 8,5 bis 9,0 gehalten. Nach 3 h lässt man die Temperatur langsam auf 20° C ansteigen. Nach Beendigung der Kondensation salzt man den Farbstoff durch Zugabe von 25%iger Natriumchloridlösung aus, saugt ihn ab, wäscht ihn mit 5%iger Natriumchloridlösung und trocknet ihn bei 40° C im Vakuum. Der Farbstoff entspricht der Formel

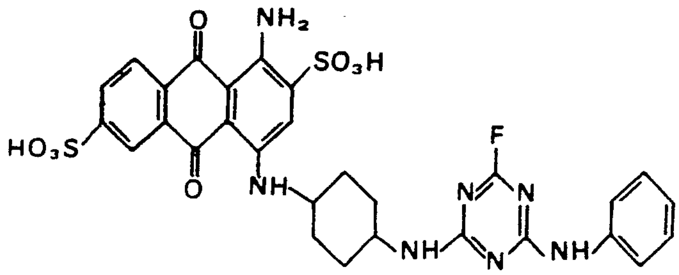

Er gibt auf Baumwolle aus langer Flotte bei 40 bis 50° C brillante blaue Färbung mit ausgezeichneten Licht- und Nassechtheiten.

*Beispiel 38*

13,7 g 1-Amino-4-(4'-aminocyclohexylamino)anthrachinon-2,7-disulfonsäure werden bei 20° C und pH 9 in 220 ml Wasser gelöst. In die Lösung trägt man bei 15 bis 20° C 4,3 g 2-Amino-4,6-difluorotriazin in 10 min ein und hält den pH-Wert mit 2N-Natronlauge auf 8,5 bis 8,7. Zur Beendigung der Kondensation rührt man 3 h bei diesem pH-Wert nach, salzt dann den Farbstoff mit 15% Natriumchlorid aus, saugt ab, wäscht den Filterkuchen mit 15%iger Natriumchloridlösung und trocknet bei 45° C im Vakuum. Der Farbstoff entspricht der Formel

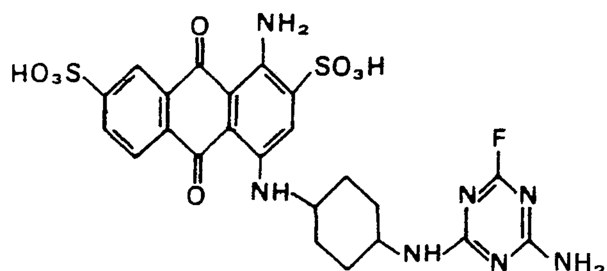

und gibt auf Cellulosefasern klare, blaue Drucke und Färbungen.

Weitere Reaktivfarbstoffe, die auf Cellulosefasern brillante, blaue Färbungen und Drucke liefern, werden erhalten durch Kondensation der in Tabelle II genannten Anthrachinon- und Reaktivkomponenten:

*Tabelle II*

| Nr. | Anthrachinonkomponente | Reaktivkomponente |
|---|---|---|
| 39 | 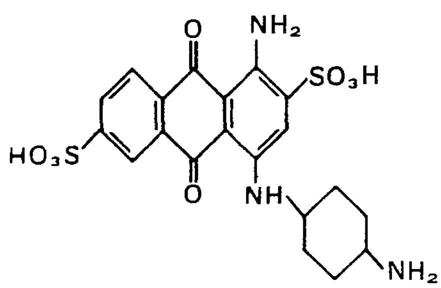 | 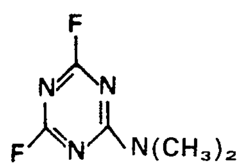 |
| 40 | 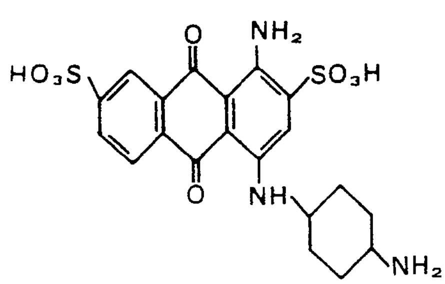 | 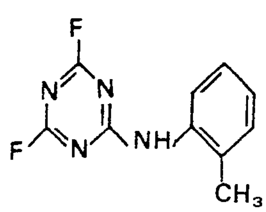 |

*Tabelle II*

| Nr. | Anthrachinonkomponente | Reaktivkomponente |
|---|---|---|
| 41 | 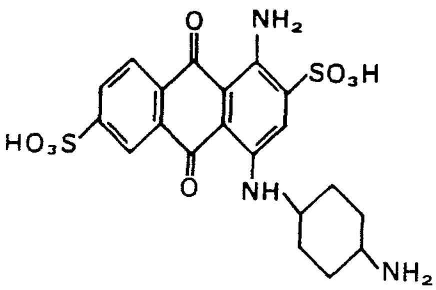 | 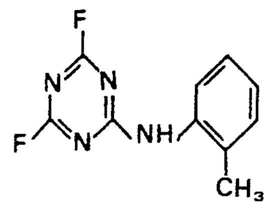 |
| 42 | 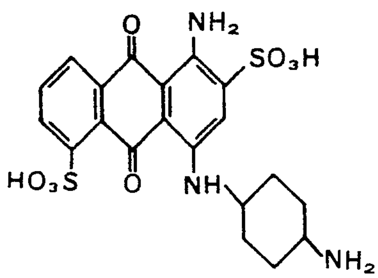 | 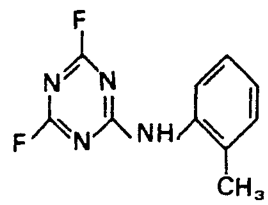 |
| 43 | 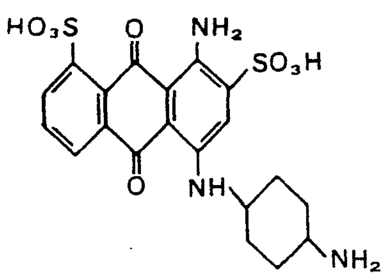 | 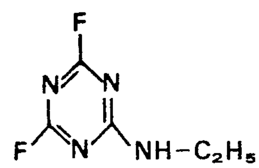 |
| 44 | 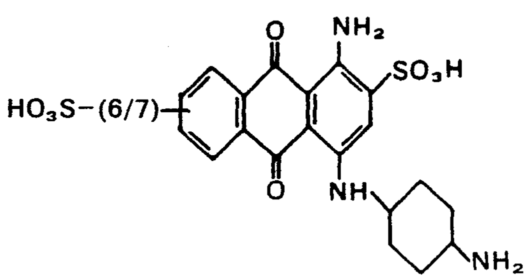 | 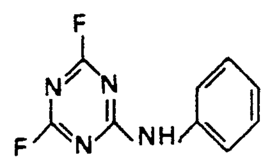 |
| 45 | 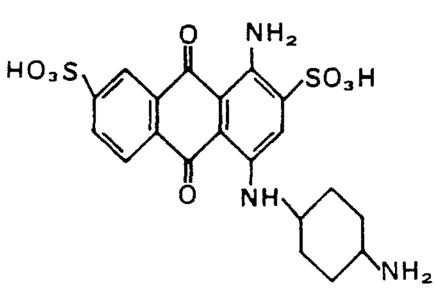 | 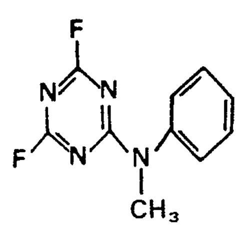 |

*Tabelle II*

| Nr. | Anthrachinonkomponente | Reaktivkomponente |
|---|---|---|
| 46 | 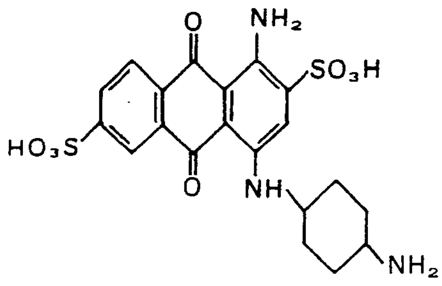 | 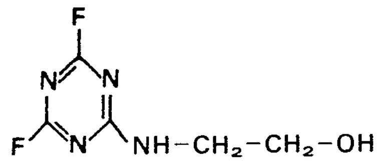 |
| 47 | 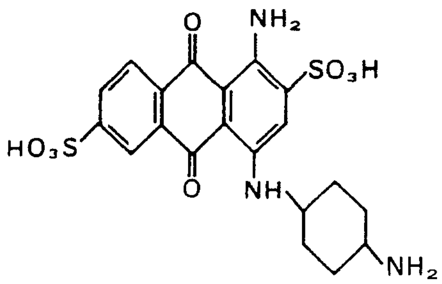 | 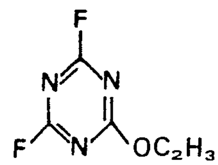 |
| 48 | 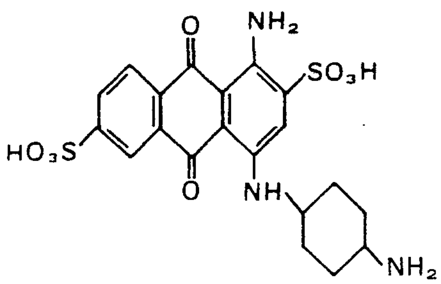 | 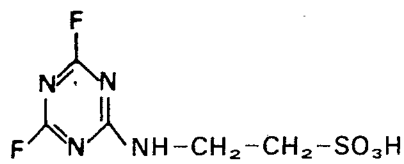 |
| 49 | 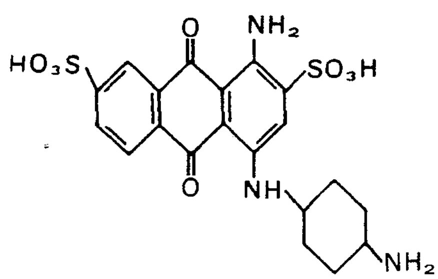 | 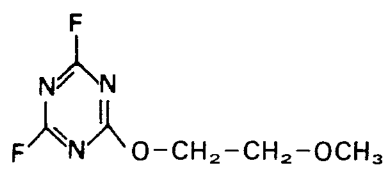 |
| 50 | 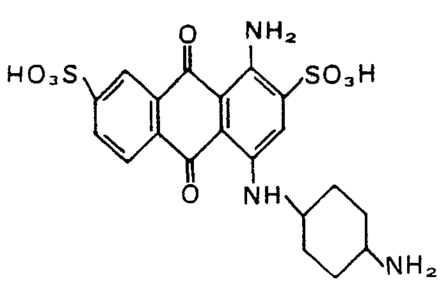 | 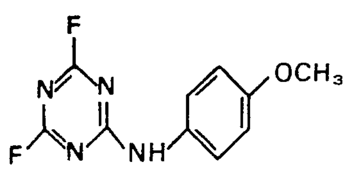 |

*Tabelle II*

| Nr. | Anthrachinonkomponente | Reaktivkomponente |
|---|---|---|
| 51 | 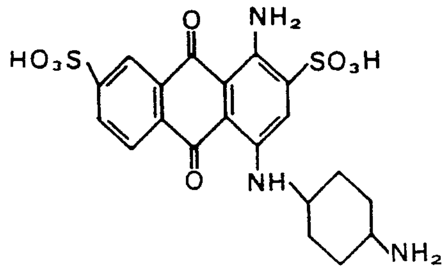 | 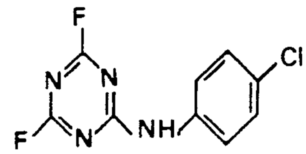 |
| 52 | 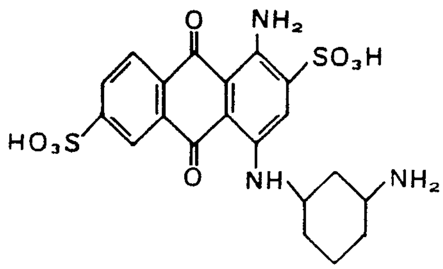 | 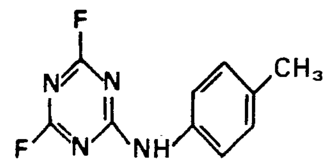 |
| 53 | 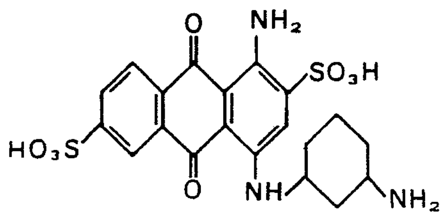 | 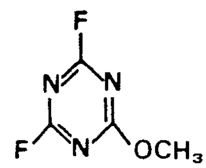 |
| 54 | 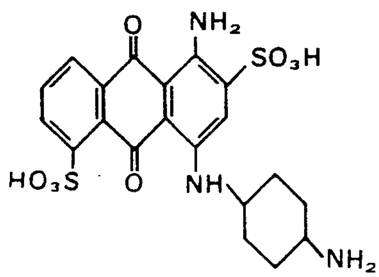 | 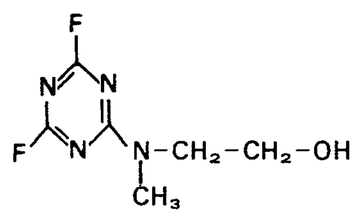 |
| 55 | 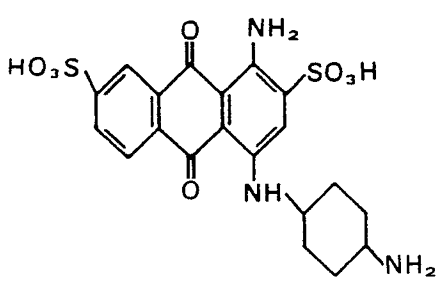 | 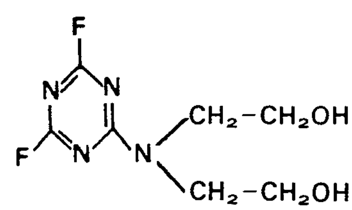 |

*Tabelle II*

| Nr. | Anthrachinonkomponente | Reaktivkomponente |
|---|---|---|
| 56 | 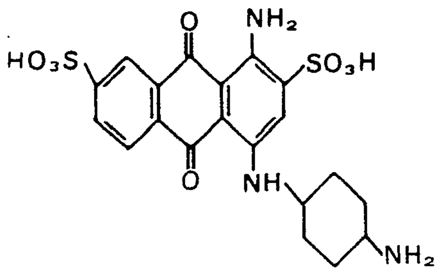 | 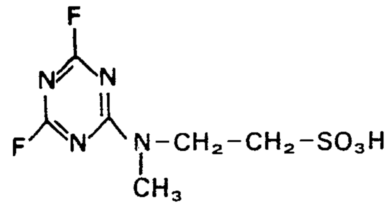 |
| 57 | 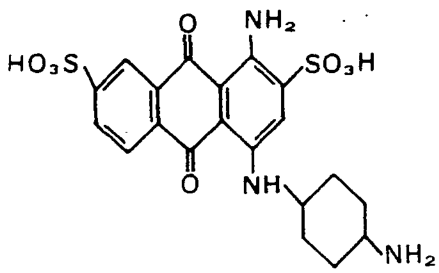 | 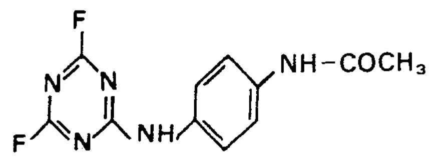 |
| 58 | 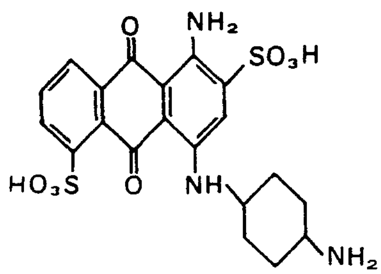 | 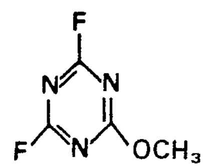 |
| 59 | 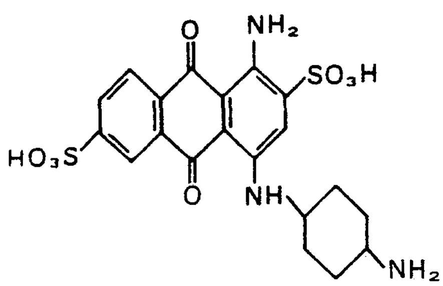 | 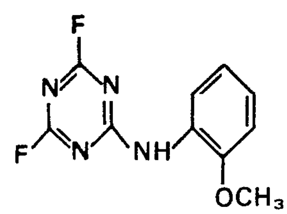 |
| 60 | 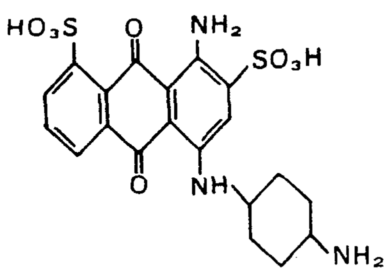 | 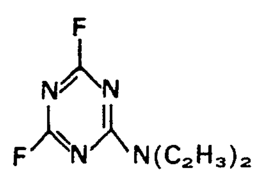 |

*Tabelle II*

| Nr. | Anthrachinonkomponente | Reaktivkomponente |
|---|---|---|
| 61 | 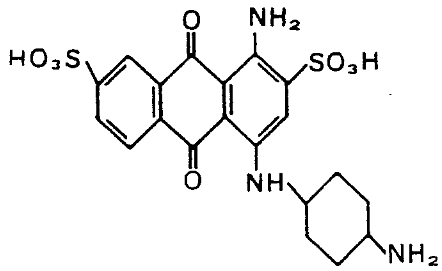 | 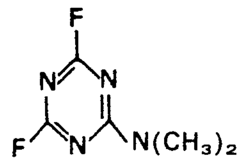 |
| 62 | 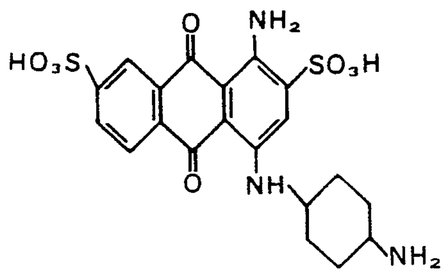 | 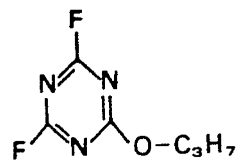 |
| 63 | 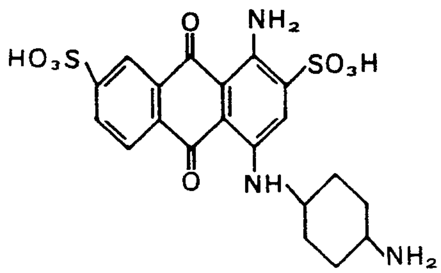 | 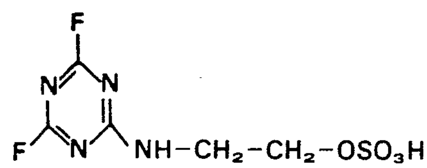 |
| 64 | 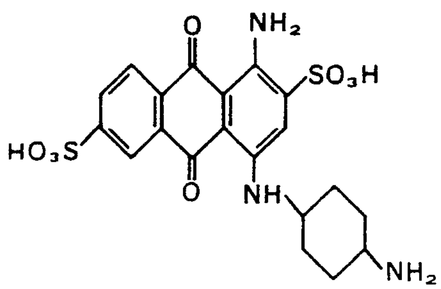 | 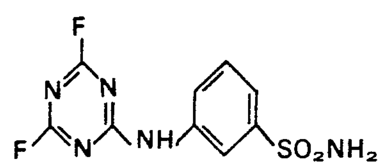 |
| 65 | 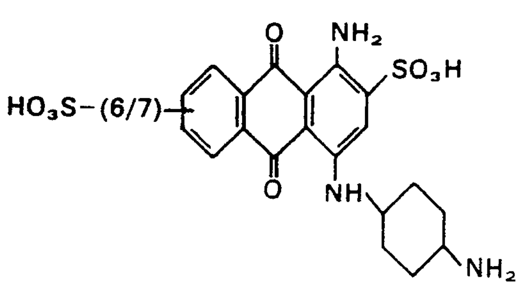 | 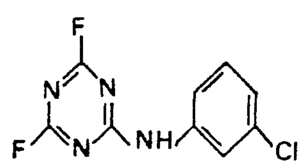 |

*Tabelle II*

| Nr. | Anthrachinonkomponente | Reaktivkomponente |
|---|---|---|
| 66 | 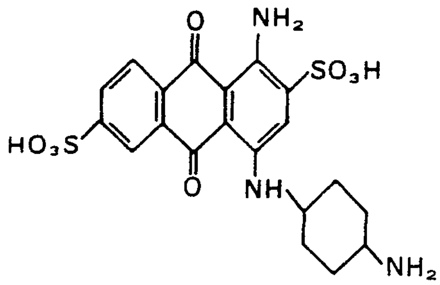 | 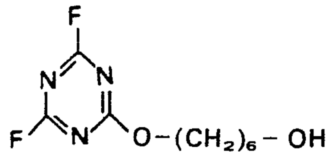 |
| 67 | 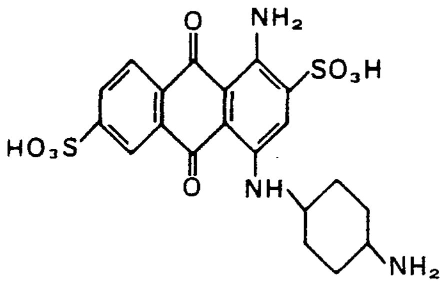 | 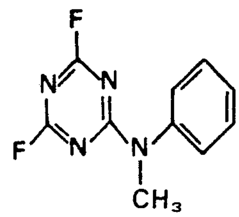 |
| 68 | 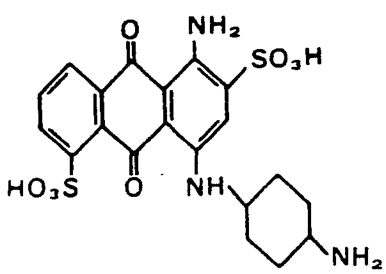 | 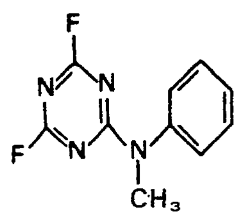 |
| 69 | 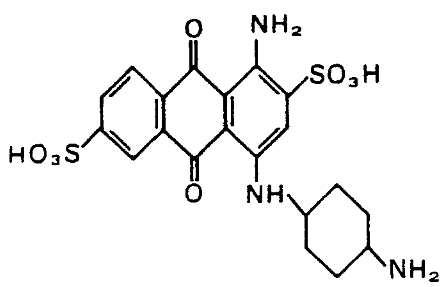 | 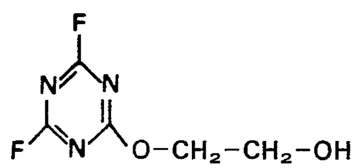 |
| 70 | 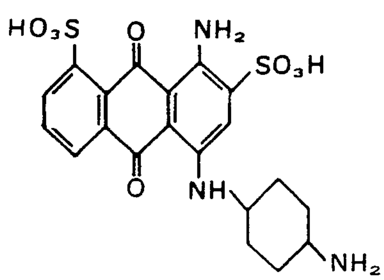 | 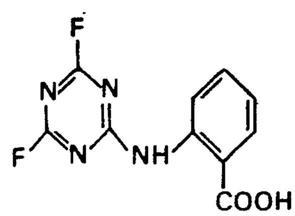 |

*Tabelle II*

| Nr. | Anthrachinonkomponente | Reaktivkomponente |
|---|---|---|
| 71 | 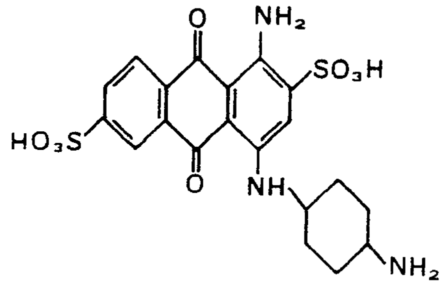 | 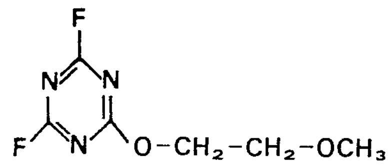 |

## Patentansprüche

1. Reaktivfarbstoffe der Formel

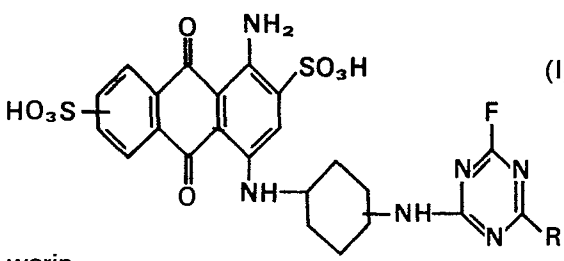

(I)

worin

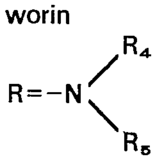

(wobei $R_4$, $R_5$ = H oder gegebenenfalls substituiertes $C_1$-$C_4$-Alkyl), gegebenenfalls substituiertes Arylamino,
$OR_6$
(wobei $R_6$ = gegebenenfalls substituiertes $C_1$-$C_6$-Alkyl).

2. Farbstoffe der Formel (I) gemäss Anspruch 1, worin
R für gegebenenfalls durch $SO_3H$, COOH, $CH_3$, Cl oder $OCH_3$ substituiertes Phenylamino steht.

3. Verwendung der Farbstoffe gemäss Anspruch 1 zum Färben und Bedrucken hydroxylgruppenhaltiger und amidgruppenhaltiger Fasermaterialien.

## Revendications

1. Colorants de formule:

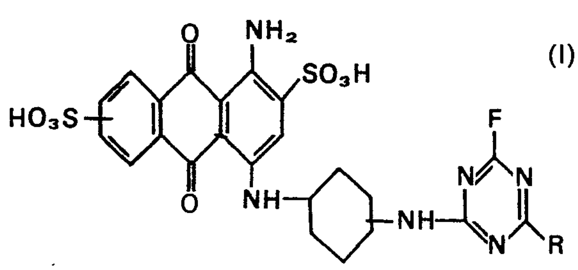

(I)

dans laquelle:

R représente 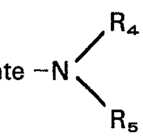

(où $R_4$, $R_5$ = H ou alkyle en $C_1$ à $C_4$, éventuellement substitué),
un groupe arylamino éventuellement substitué ou un groupe
$OR_6$
(où $R_6$ = alkyle en $C_1$ à $C_6$, éventuellement substitué).

2. Colorants de formule (I) suivant la revendication 1, caractérisés en ce que
R désigne un groupe phénylamino éventuellement substitué par un radical $SO_3H$, COOH, $CH_3$, Cl ou $OCH_3$.

3. Utilisation des colorants suivant la revendication 1 pour la teinture et l'impression de matières fibreuses contenant des groupes hydroxyle et contenant des groupes amido.

## Claims

1. Reactive dyestuffs of the formula

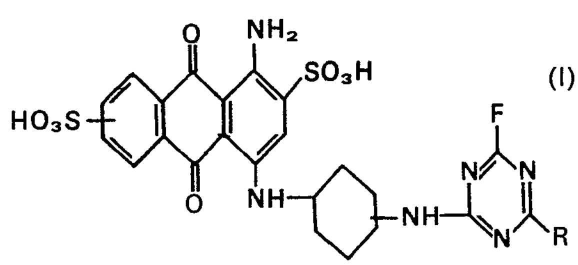

(I)

wherein

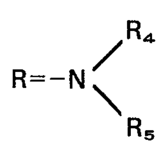

(wherein $R_4$, $R_5$ = H or optionally substituted $C_1$-

$C_4$-alkyl), optionally substituted arylamino, or $OR_6$ (wherein $R_6$ = optionally substituted $C_1$-$C_6$-alkyl).

2. Dyestuffs of the formula (I) according to Claim 1, wherein

R represents phenylamino which is optionally substituted by $SO_3H$, $COOH$, $CH_3$, Cl or $OCH_3$.

3. Use of the dyestuffs according to Claim 1 for dyeing and printing fibre materials containing hydroxyl groups or amide groups.